# EUROPÄISCHE PATENTSCHRIFT

(11) **EP 3 158 507 B1**
(45) Veröffentlichungstag und Bekanntmachung des Hinweises auf die Patenterteilung: **07.08.2019**
(21) Anmeldenummer: 15738588.1
(22) Anmeldetag: 15.06.2015
(51) Int. Cl.: G06K 19/077

(54) **VERFAHREN UND VORRICHTUNG ZUR KONTAKTBEHAFTETEN ÜBERTRAGUNG VON DATEN AN KONTAKTLOSE SICHERHEITSMODULE**
METHOD AND APPARATUS FOR CONTACT-BASED TRANSMISSION OF DATA TO CONTACTLESS SECURITY MODULES
PROCÉDÉ ET DISPOSITIF DE TRANSMISSION PAR CONTACT DE DONNÉES À DES MODULES DE SÉCURITÉ SANS CONTACT

(30) Priorität: 18.06.2014 DE 102014009049
(43) Veröffentlichungstag der Anmeldung: 26.04.2017
(73) Patentinhaber: Giesecke+Devrient Mobile Security GmbH, 81677 München (DE)
(72) Erfinder: FINKENZELLER, Klaus, 85774 Unterföhring (DE); AURACHER, Ulrich, 83607 Holzkirchen (DE); WINKLER, René, 81829 München (DE); HOFFMANN, Steffen, 85521 Ottobrunn (DE); BALDISCHWEILER, Michael, 81825 München (DE)
(86) Internationale Anmeldenummer: PCT/EP2015/001202
(87) Internationale Veröffentlichungsnummer: WO 2015/192956

(56) Entgegenhaltungen:
- DE-A1- 19 958 559
- DE-A1-102009 052 610
- US-A1- 2005 034 889

## Beschreibung

Die vorliegende Erfindung betrifft eine Vorrichtung zur kontaktbehafteten Übertragung von Daten an Sicherheitsmodule, welche für einen zur kontaktlosen Kommunikation eingerichteten Datenträgern vorgesehen sind.

WO 2007/124939 A1 beschreibt eine parallele Datenübertragung von einem Lesegerät zu einer Vielzahl von Chipkarten. Unter anderem wird dort vorgeschlagen Adapter zu verwenden, welcher über die Antenne des Adapters kontaktlos das Signal des Lesegerätes empfängt und das empfangene Signal an die Antennenkontakte der jeweiligen Chipkarte weiterleitet. Diese Lösung ist jedoch fehleranfällig, unter anderem da nur eine unidirektionale Kommunikation zur Chipkarte möglich ist.

Aufgabe der vorliegenden Erfindung ist es, ein verbessertes Verfahren und eine Vorrichtung zur Übertragung von Daten an Sicherheitsmodule bereitzustellen, welche insbesondere weniger fehleranfällig ist.

Diese Aufgabe wird durch ein Verfahren und eine Vorrichtung mit den Merkmalen der unabhängigen Ansprüche gelöst. Vorteilhafte Ausgestaltungen und Weiterbildungen der Erfindung sind in den abhängigen Ansprüchen angegeben.

Gemäß dem vorliegenden Verfahren werden Daten auf Sicherheitsmodule mit Antennenanschlüssen übertragen. Die Antennenanschlüsse des Sicherheitsmoduls werden kontaktiert und die Daten werden kontaktbehaftet über die Antennenanschlüsse an das Sicherheitsmodul übertragen. Antennenanschlüsse eines Kartenlesegerätes sind kontaktiert sind und ein Antennensignal des Kartenlesegerätes wird in ein Antennensignal für das Sicherheitsmodul transformiert.

Eine entsprechende Vorrichtung zur Übertragung von Daten auf Sicherheitsmodule mit Antennenanschlüssen umfasst: einen Signaleingang für ein Antennensignal eines Kontaktloslesegerätes, eine Transformationseinheit, welche das eingehende Antennensignal in ein ausgehendes Antennensignal für das Sicherheitselement transformiert, und einen Signalausgang für das ausgehende Antennensignal, welches kontaktbehaftet an die Antennenanschlüsse des Sicherheitsmoduls übertragbar ist.

Ein Antennensignal des Sicherheitsmoduls - in Antwort auf die übertragenen Daten - wird in ein Antennensignal für das Kartenlesegerät transformiert, so dass eine bidirektionale Datenkommunikation entsteht.

Die Transformationseinheit umfasst primäre Windungen, einen gemeinsamen Transformations-Kern und sekundäre Windungen. Diese Ausgestaltung ist in mehrfacher Hinsicht vorteilhaft. Die Vorrichtung wird bereits per se kompakter. Zudem werden störende Einflüsse, wie Einkopplungen, reduziert.

Vorzugsweise ist die Transformationseinheit als Balun-Schaltung ausgebildet. Balun steht dabei für BAlanced-UNbalanced. Zur Seite des Sicherheitsmoduls hin ist die Schaltung symmetrisch bzw. balanced. Welcher der beiden Antennenanschlüsse des Sicherheitsmoduls an welchen Gegenkontakt angelegt wird ist unerheblich, die Anschlüsse am Sicherheitsmodul sind gleichwertig und können vertauscht werden. Die Schaltung zum Leser hin ist dagegen unbalanced, d. h. unsymmetrisch. Es gibt einen eindeutigen Masseanschluss sowie einen eindeutigen Signalanschluss.

Vorzugsweise werden gleichzeitig Daten zu mehreren, kontaktierten Sicherheitsmodulen übertragen, die auf einem gemeinsamen Träger bereitgestellt werden. Als gemeinsamer Träger könnte insbesondere ein Bogen oder ein Modulband dienen. Die Sicherheitsmodule sind somit einheitlich angeordnet, so dass positionsbedingte Kontaktierungsfehler seltener sind als bei einer möglichen Kontaktierung bereits vereinzelter Sicherheitsmodule.

Eine Vielzahl von Signaladaptern, die jeweils Signaleingang, Transformationseinheit und Signalausgang umfassen, können nebeneinander angeordnet werden. Es muss kein besonderer Abstand zwischen den Signaladaptern vorgesehen werden, da sich die Transformationseinheiten nicht gegenseitig beeinflussen.

Die Vorrichtung wird eine entsprechende Vielzahl von Kartenlesegeräten umfassen bzw. ggf. ein Kartenlesegerät mit einer Vielzahl von unabhängig ansteuerbaren Antennenanschlüssen.

Der Signaladapter kann eigene Gegenkontakte für die Antennenanschlüsse aufweisen oder an eine Kontaktiereinheit, welche Gegenkontakte für die Antennenanschlüsse des Sicherheitsmoduls umfasst, angeschlossen werden. Vorzugsweise umfasst die Vorrichtung eine Mehrfach-Kontaktiereinheit umfasst, welche mehrere Signaladapter und/ oder die Kontaktiereinheiten umfasst. Besonders bevorzugt sind (die) Signaladapter starr mit der (ihrer) Kontaktiereinheit verbunden.

Die Vorrichtung bzw. der Signaladapter können Schaltungselemente, insbesondere in der Form regelbarer Kapazitäten, ausweisen, die eine Anpassung an unterschiedliche Sicherheitsmodule ermöglichen.

Sieht man neben den primären Windungen Zusatzwindungen vor, die mit einem Messanschluss verbunden sind, kann eine Mess- und/oder Signalauswertungsvorrichtung an den Messanschluss angeschlossen werden. Dieser Messanschluss beeinflusst dann nicht (die Datenübertragung bzw.) die Abstimmung des Signaladapters an das Sicherheitsmodul.

Wenn die Transformationseinheit in einem geerdeten Gehäuse angeordnet wird, werden beispielweise gegenseitige Störungen der Transformationseinheiten noch weiter vermieden.

In einem späteren Verfahrensschritt, also nach der Datenübertragung, wird aus dem Sicherheitsmodul und aus einer Antenne ein Datenträger gebildet. Vorzugsweise umfasst der Datenträger dabei ein Trägersubstrat, beispielsweise in der Form eines Kartenkörpers oder einer Trägerfolie.

Ein Produktionssystem kann umfassen: die Vorrichtung zum Übertragen der Daten auf Sicherheitsmodule sowie Mittel zum Herstellen eines Datenträgers umfassend das Sicherheitsmodul und eine angeschlossene Antenne.

Sicherheitsmodule mit Antennenanschluss können als Chipkartenmodule, als RFID-Module, als NFC-Module, als TPM-Module oder ähnliches vorliegen. Das Sicherheitsmodul umfasst einen Prozessor, der eingerichtet ist für eine kontaktlose Datenkommunikation. Zudem umfasst das Sicherheitsmodul einen nicht-flüchtigen Speicher zum Speichern der übertragenen Daten. Der Datenträger kann eine Chipkarte, SIM-Karte, sichere Massenspeicherkarte, RFID-Karte, ein RFID-Token oder ein sonstiger tragbarer Datenträger mit Antenne sein. Als NFC-Modul oder TPM-Modul wird das Sicherheitsmodul dagegen fest in ein Endgerät eingebaut und dabei mit einer Antenne verbunden.

Die vorliegende Erfindung wird nachfolgend mit Bezug auf die beiliegenden Zeichnungen beispielhaft beschrieben. Darin zeigen:
- Figur 1: eine funktionale Darstellung einer Vorrichtung zur Übertragung von Daten auf mehrere Sicherheitsmodule;
- Figur 2: einen Datenträger mit Antenne und Sicherheitsmodul;
- Figur 3: Schritte zur Herstellung von Datenträgern einschließlich der Datenübertragung zu den Sicherheitsmodulen;
- Figur 4: eine schematische Darstellung einer Vorrichtung zur Datenübertragung; und
- Figur 5: eine Ausgestaltung eines Signaladapters in der schematisch angedeuteten Vorrichtung.

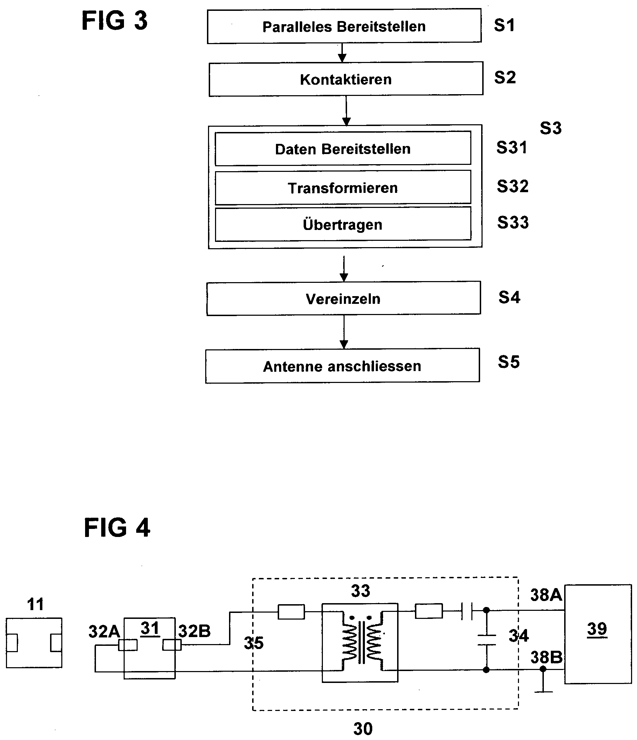

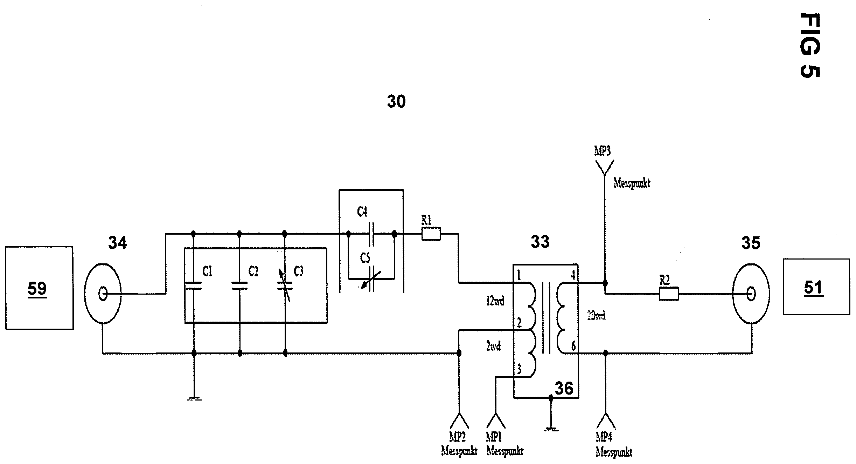

Der grundlegende Ablauf in einem Produktionssystem wird im Folgenden anhand von Figur 3 beschrieben bevor auf die Ausgestaltung der vorliegenden Vorrichtung mit Bezug auf die Figuren 4 und 5 eingegangen wird.

In Schritt S1 von Figur 3 wird eine Vielzahl von Sicherheitsmodul auf einem gemeinsamen Träger bereitgestellt.

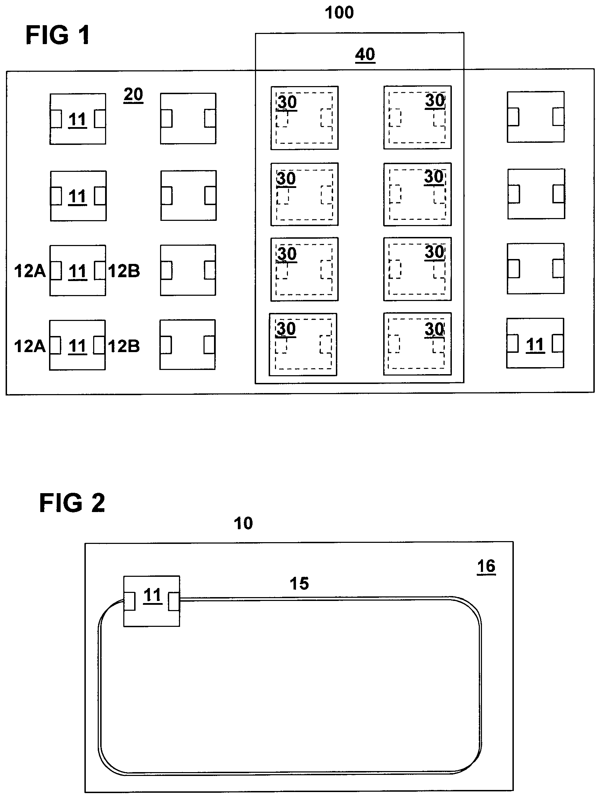

Figur 1 zeigt eine Vielzahl von Sicherheitsmodulen 11 mit Antennenanschlüssen 12A, 12B, die auf einem gemeinsamen Träger 20 angeordnet sind. Der gemeinsame Träger 20 ist beispielsweise ein Modulband, auf dem mindestens zwei Sicherheitsmodule 11 nebeneinander angeordnet sind.
Jeweils eine Gruppe von - hier acht - Sicherheitsmodulen 11 wird unter einer Mehrfach-Kontaktiereinheit 40 einer Vorrichtung 100 zur Übertragung von Daten angeordnet. Nach einer Kontaktierung der Sicherheitsmodule 11 erfolgt eine kontaktbehaftete Datenübertragung. Die Vorrichtung 100 umfasst ferner eine Vielzahl von nebeneinander angeordneten Signaladaptern 30 und eine Vielzahl daran angeschlossener, nicht figürlich dargestellter Kontaktlos-Kartenlesern.

In Schritt S2 werden die Sicherheitsmodule 11 im Wesentlichen gleichzeitig durch die Vorrichtung kontaktiert, damit in Schritt S3 Daten jeweils vom Kontaktlos-Kartenleser über den Signaladapter 30 kontaktbehaftet zum Sicherheitsmodul übertragen werden.

Erst nach der Datenübertragung S3 werden die Sicherheitsmodule 11 aus dem gemeinsamen Träger 20 vereinzelt S4. In einem weiteren Schritt S5 des Produktionssystems wird an die Antennenanschlüsse 12A,12B des Sicherheitsmoduls 11 eine Antenne angeschlossen. Anzumerken ist, dass das Sicherheitsmodul theoretisch bereits bei der Datenübertragung eine angeschlossene Antenne umfassen könnte.

Figur 2 zeigt schematisch einen entsprechend hergestellten Datenträger 10, beispielsweise in der Form einer Chipkarte, mit dem Sicherheitsmodul 11, einer angeschlossenen Spule als Antenne 15 sowie einem Träger 16, also beispielweise einem Kartenkörper oder einer Spulenträgerfolie (Zwischenprodukt).

Teilschritte S31 bis S33 der Datenübertragung S3 aus Figur 3 werden nun mit Bezug auf Figur 4 beschrieben. Figur 4 zeigt stark schematisiert das Sicherheitsmodul 11 und die wichtigsten Komponenten der Vorrichtung: Kontaktiereinheit 31, Signaladapter 30 und Kontaktloslesegerät 39.

Das Sicherheitsmodul 11 wird von der Kontaktiereinheit 31 mit seinen Gegenkontakten 32A, 32B zu den Antennenanschlüssen des Sicherheitsmoduls 11 kontaktiert. Ein Signalausgang 35 des Signaladapters 30 ist an die Kontaktiereinheit 31 angeschlossen. Der Signaladapter 30 umfasst eine Transformationseinheit 33, vorzugsweise in der Form einer BALUN-Schaltung. Ein Signaleingang 34 des Signaladapters 30 ist an Antennenanschlüsse 38A, 38B eines Kontaktlos-Lesegerätes 39 verbunden. Der Antennenanschluss 38B ist geerdet.

Der Schritt S3 der Datenübertragung erfolgt zeitgleich aber unabhängig voneinander durch Übertragung von einer Vielzahl von Lesegeräten 39 über die jeweiligen Signaladapter 30 und Kontaktiereinheiten 31 auf die Sicherheitsmodule 11 (siehe z.b. in Figur 1). Dennoch wird vereinfachend die Datenübertragung für ein Sicherheitsmodul beschrieben.

Das Lesegerät 39 stellt an seinen Antennenanschlüssen 38A, 38B ein Antennensignal bereit S31, welches die zu übertragenden Daten umfasst. Der Signaladapter 30 ist - gegebenenfalls über ein Kabel - an die Antennenanschlüsse 38A, 38B des Lesegeräts 39 angeschlossen.

Das eingehende Antennensignal am Signaleingang 34 wird durch die Transformationseinheit 33 in ein Antennensignal für das Sicherheitsmodul 11 transformiert S32. Die Transformationseinheit 33 umfasst dabei primäre Windungen, einen gemeinsamen Transformations-Kern sowie sekundäre Windungen.

Die Kontaktiereinheit 31 hat - wie zuvor beschreiben - in Schritt S2 die Antennenanschlüsse des Sicherheitsmoduls 11 kontaktiert. Das ausgehende Antennensignal wird kontaktbehaftet über den mit der Kontaktiereinheit 31 verbundenen Signalausgang 35 des Signaladapters 30 und die Kontaktiereinheit 31 an das Sicherheitsmodul 11 übertragen S33.

Die mit dem Antennensignal übertragenen Daten sind beispielsweise Initialisierungsdaten und/oder Personalisierungsdaten, die in dem Sicherheitsmodul gespeichert werden. Eine Antwort des Sicherheitsmoduls auf die übertragenen Daten kann eine einfache Bestätigung, eine Fehlermeldung aber auch weitere Daten (wie Identifikationsdaten, Authentisierungsdaten ...) umfassen. Die Transformationseinheit wird ein Antennensignal des Sicherheitsmoduls 11 in ein Antennensignal für das Lesegerät 39 transformieren, so dass ein Rückkanal vom Sicherheitsmodul zum Lesegerät besteht (bidirektionale Kommunikation).

Eine weiter bevorzugte Ausgestaltung des Signaladapters 30 ist in Figur 5 gezeigt. Der Signaladapter 30 mit Signaleingang 34, Transformationseinheit 33 und Signalausgang 35 ist wiederum angeschlossen an eine Kontaktiereinheit 51 einerseits und ein Kontaktloslesegerät 59 andererseits. Die Kontaktiereinheit 51 kann Teil einer Mehrfachkontaktier-Einheit sein oder aber auch als Teil des Signaladapters 30 ausgebildet werden. Das Kontaktloslesegerät 59 kann ein Mehrfach-Lesegerät mit mehreren, unabhängig voneinander ansteuerbaren Antennen-Anschlüssen sein oder ein eigenständiges Lesegerät sein.

Der Signaladapter 30 in Figur 5 umfasst weitere Schaltungselemente C1 bis C5 sowie R1 und R2, welche teilweise als regelbare Schaltungselemente C5 und C3 ausgebildet sind. Mit Hilfe der regelbaren Schaltungselemente C5 und C3 kann der Signaladapter an unterschiedliche Sicherheitsmodule 11 bzw. deren unterschiedliche Eigenschaften angepasst werden.

Zur Seite des Sicherheitsmoduls 51 hin ist die Schaltung 33 symmetrisch bzw. balanced. Welcher der beiden Antennenanschlüsse des Sicherheitsmoduls an welchen Gegenkontakt angelegt wird ist unerheblich, die Anschlüsse am Sicherheitsmodul sind gleichwertig und können vertauscht werden. Die Schaltung zum Leser hin 59 ist dagegen unbalanced, d. h. unsymmetrisch. Es gibt einen eindeutigen Masseanschluss sowie einen eindeutigen Signalanschluss.

Neben beispielsweise zwölf primären Windungen sind zwei weitere Windungen (auf der Primärseite) in der BALUN-Schaltung 33 vorgesehen. An diesen Windungen kann - ohne Störung der Datenübertragung oder Störung der Abstimmung des Adapters an das Sicherheitsmodul - eine Messeinheit oder eine Signalauswerteinheit angeschlossen werden. Entsprechende Anschlüsse MP1 und MP2 sind vorgesehen. Die angeschlossene Einheit kann die eingehenden Signale mithören bzw. überprüfen und somit gegebenenfalls zu einer Fehlerbeseitigung beitragen.

Die BALUN-Schaltung 33 ist in einem geerdeten metallischen Gehäuse 36 angeordnet. Beispielsweise eine mögliche Rest-Störung von nebeneinander angeordneten Adaptern 30 wird somit weiter reduziert.

## Patentansprüche

1. Verfahren zur Übertragung von Daten auf Sicherheitsmodule (11) mit Antennenanschlüssen (12A, 12B), mit den folgenden Schritten:
- Kontaktieren (S2) der Antennenanschlüssen (12A, 12B) des Sicherheitsmoduls (11);
- Kontaktbehaftetes Übertragen (S3) der Daten über die Antennenanschlüsse (12A, 12B) an das Sicherheitsmodul (11);
wobei s Antennenanschlüsse (38A, 38B) eines Kartenlesegerätes (39) kontaktiert sind; und
ein Antennensignal des Kartenlesegerätes (39) in ein Antennensignal für das Sicherheitsmodul (11) transformiert wird,
wobei die Antennenanschlüsse (38A, 38B) des Kartenlesegerätes (39) mit dem Eingang einer Transformationseinheit (33) und die Antennenanschlüsse (12A, 12B) des Sicherheitsmoduls (11) mit dem Ausgang der Transformationseinheit (33) verbunden sind;
**dadurch gekennzeichnet, dass** die Transformationseinheit (33) in einem Gehäuse angeordnet ist.

2. Verfahren nach Anspruch 1 **dadurch gekennzeichnet, dass** gleichzeitig Daten zu mehreren, kontaktierten Sicherheitsmodulen (11) übertragen werden, die auf einem gemeinsamen Träger (20) bereitgestellt werden (S1).

3. Verfahren nach Anspruch 1 oder 2, **dadurch gekennzeichnet, dass** nach der Datenübertragung (S3) ein Datenträger (10) aus dem Sicherheitsmodul (11) und einer Antenne (15) gebildet wird (S4, S5).

4. Verfahren nach einem der Ansprüche 1 bis 3, **dadurch gekennzeichnet, dass** ein Antennensignal des Sicherheitsmodul (11) in ein Antennensignal für Kartenlesegerätes (39) transformiert wird.

5. Vorrichtung (30, 100) zur Übertragung von Daten auf Sicherheitsmodule (11) mit Antennenanschlüssen (12A, 12B), welche für kontaktlos kommunizierende Datenträger (10) vorgesehen sind, wobei die Vorrichtung (30,100) umfasst:
- einen Signaleingang (34) für ein Antennensignal eines Kontaktloslesegerätes (39), der kontaktbehaftet mit den Antennenanschlüssen (38A, 38B) eines Kontaktloslesegerätes (39) verbunden ist;
- eine Transformationseinheit (33), welche das eingehende Antennensignal in ein ausgehendes Antennensignal für das Sicherheitselement transformiert,
und
- einen Signalausgang (35) für das ausgehende Antennensignal, welches kontaktbehaftet an die Antennenanschlüsse (12A, 12B) des Sicherheitsmoduls (11) übertragbar ist;
**dadurch gekennzeichnet, dass** die Transformationseinheit (33) in einem Gehäuse angeordnet ist.

6. Vorrichtung (100) nach Anspruch 5, **dadurch gekennzeichnet, dass** die Transformationseinheit (33) primäre Windungen, einen gemeinsamen Transformations-Kern und sekundäre Windungen aufweist.

7. Vorrichtung (100) nach Anspruch 5 oder 6, **dadurch gekennzeichnet, dass** die Transformationseinheit (33) als Balun-Schaltung ausgebildet ist.

8. Vorrichtung (100) nach einem der Ansprüche 5 bis 7, **dadurch gekennzeichnet, dass** die Vorrichtung (100) zur gleichzeitigen Übertragung von Daten auf Sicherheitsmodule eine Vielzahl von Signaladaptern (30), jeweils mit Signaleingang, Transformationseinheit und Signalausgang, umfasst.

9. Vorrichtung (100) nach Anspruch 8, **dadurch gekennzeichnet, dass** die Vorrichtung (100) eine entsprechende Vielzahl von Kartenlesegeräten (39) umfasst.

10. Vorrichtung (100) nach einem der Ansprüche 5 bis 9, **dadurch gekennzeichnet, dass** die Vorrichtung (100) eine Kontaktiereinheit (31) umfasst, welche Gegenkontakte (32A, 32B) für die Antennenanschlüsse (12A,12B) des Sicherheitsmoduls umfasst.

11. Vorrichtung (100) nach einem der Ansprüche 7 bis 10, **dadurch gekennzeichnet, dass** die Vorrichtung (100) eine Mehrfach-Kontaktiereinheit (40) umfasst, welche die Signaladapter (30) und/oder die Kontaktiereinheiten (31) umfasst.

12. Vorrichtung (100) nach einem der Ansprüche 5 bis 11, **dadurch gekennzeichnet, dass** die Vorrichtung (100) für eine Anpassung der Vorrichtung (100) an unterschiedliche Sicherheitsmodule anpassbare Schaltungselemente (C3, C5) aufweist.

13. Vorrichtung (100) nach einem der Ansprüche 5 bis 12, **dadurch gekennzeichnet, dass** die Transformationseinheit (33) in einem geerdeten Gehäuse (36) angeordnet ist.

14. Vorrichtung (100) nach einem der Ansprüche 5 bis 12, **dadurch gekennzeichnet, dass** die Vorrichtung eingerichtet ist, Daten an eine Vielzahl von auf einem gemeinsamen Träger (20) angeordneten Sicherheitsmodulen (11) zu übertragen.

15. Produktionssystem mit einer Vorrichtung (100) nach einem der Ansprüche 5 bis 14 sowie Mitteln zum Herstellen eines Datenträgers (10), umfassend das Sicherheitsmodul (11), eine Antenne (15) sowie ein Trägersubstrat (16).

## Claims

1. A method for transmitting data to security modules (11) having antenna terminals (12A, 12B), having the following steps:
- contacting (S2) the antenna terminals (12A, 12B) of the security module (11);
- transmitting (S3) the data via the antenna terminals (12A, 12B) to the security module (11) using physical contacts;
wherein
antenna terminals (38A, 38B) of a card reading device (39) are contacted; and
an antenna signal of the card reading device (39) is transformed into an antenna signal for the security module (11),
wherein the antenna terminals (38A, 38B) of the card reading device (39) are connected to the input of a transformation unit (33) and the antenna terminals (12A, 12B) of the security module (11) to the output of the transformation unit (33); **characterized in that** the transformation unit (33) is arranged in a case.

2. The method according to claim 1, **characterized in that** data is transmitted simultaneously to several contacted security modules (11), which are supplied (S1) on a common carrier (20).

3. The method according to claim 1 or 2, **characterized in that** after the data transmission (S3) a data carrier (10) is formed (S4, S5) from the security module (11) and an antenna (15).

4. The method according to claim 1 to 3, **characterized in that** an antenna signal of the security module (11) is transformed into an antenna signal for card reading device (39).

5. An apparatus (30, 100) for transmitting data to security modules (11) having antenna terminals (12A, 12B), which are provided for contactlessly communicating data carriers (10), wherein the apparatus (30, 100) comprises:
- a signal input (34) for an antenna signal of a contactless reading device (39), which is connected to the antenna terminals (38A, 38B) of a contactless reader (39) using physical contacts;
- a transformation unit (33) which transforms the incoming antenna signal into an outgoing antenna signal for the security element, and
- a signal output (35) for the outgoing antenna signal, which is transmittable to the antenna terminals (12A, 12B) of the security module (11) using physical contacts; **characterized in that** the transformation unit (33) is arranged in a case.

6. The apparatus (100) according to claim 5, **characterized in that** the transformation unit (33) has primary windings, a common transformation core and secondary windings.

7. The apparatus (100) according to claim 5 or 6, **characterized in that** the transformation unit (33) is configured as a balun circuit.

8. The apparatus (100) according to one of claims 5 to 7, **characterized in that** the apparatus (100) comprises a plurality of signal adapters (30), each having a signal input, transformation unit and signal output, for simultaneously transmitting data to security modules.

9. The apparatus (100) according to claim 8, **characterized in that** the apparatus (100) comprises a corresponding plurality of card reading devices (39).

10. The apparatus (100) according to one of claims 5 to 9, **characterized in that** the apparatus (100) comprises a contacting unit (31) which comprises mating contacts (32A, 32B) for the antenna terminals (12A, 12B) of the security module.

11. The apparatus (100) according to one of claims 7 to 10, **characterized in that** the apparatus (100) comprises a multiple contacting unit (40), which comprises the signal adapters (30) and/or the contacting units (31).

12. The apparatus (100) according to one of claims 5 to 11, **characterized in that** the apparatus (100) has adaptable circuit elements (C3, C5) for adapting the apparatus (100) to different security modules.

13. The apparatus (100) according to one of claims 5 to 12, **characterized in that** the transformation unit (33) is arranged in an earthed case (36).

14. The apparatus (100) according to one of claims 5 to 12, **characterized in that** the apparatus is configured to transmit data to a plurality of security modules (11) arranged on a common carrier (20).

15. A production system having an apparatus (100) according to one of claims 5 to 14 as well as means for manufacturing a data carrier (10) comprising the security module (11), an antenna (15) as well as a carrier substrate (16).

## Revendications

1. Procédé de transmission de données sur des modules de sécurité (11) ayant des bornes d'antennes (12A, 12B), comprenant les étapes suivantes :
- mise en contact (S2) des bornes d'antennes (12A, 12B) du module de sécurité (11) ;
- transmission (S3) avec contact des données au module de sécurité (11) par l'intermédiaire des bornes d'antennes (12A, 12B) ;
cependant que des bornes d'antennes (38A, 38B) d'un appareil de lecture de cartes (39) sont en contact ;
et
un signal d'antenne de l'appareil de lecture de cartes (39) est transformé en un signal d'antenne pour le module de sécurité (11),
cependant que les bornes d'antennes (38A, 38B) de l'appareil de lecture de cartes (39) sont reliées à l'entrée d'une unité de transformation (33), et les bornes d'antennes (12A, 12B) du module de sécurité (11) sont reliées à la sortie de l'unité de transformation (33),
**caractérisé en ce que** l'unité de transformation (33) est agencée dans un boîtier.

2. Procédé selon la revendication 1, **caractérisé en ce que,** simultanément, des données sont transmises à plusieurs module de sécurité (11) en contact, lesquels sont mis à disposition (S1) sur un support (20) commun.

3. Procédé selon la revendication 1 ou 2, **caractérisé en ce que,** après la transmission (S3), un support de données (10) est formé (S4, S5) par le module de sécurité (11) et une antenne (15).

4. Procédé selon une des revendications de 1 à 3, **caractérisé en ce qu'un** signal d'antenne du module de sécurité (11) est transformé en un signal d'antenne pour l'appareil de lecture de cartes (39).

5. Dispositif (30, 100) de transmission de données sur des modules de sécurité (11) ayant des bornes d'antennes (12A, 12B), lesquels sont prévus pour des supports de données (10) communiquant sans contact, cependant que le dispositif (30, 100) comprend :
- une entrée de signal (34) pour un signal d'antenne d'un appareil de lecture sans contact (39) qui est relié avec contact avec les bornes d'antennes (38A, 38B) d'un appareil de lecture sans contact (39) ;
- une unité de transformation (33) qui transforme le signal d'antenne entrant en un signal d'antenne sortant pour l'élément de sécurité, et
- une sortie de signal (35) pour le signal d'antenne sortant, lequel peut être transmis avec contact aux bornes d'antennes (12A, 12B) du module de sécurité (11) ;
**caractérisé en ce que** l'unité de transformation (33) est agencée dans un boîtier.

6. Dispositif (100) selon la revendication 5, **caractérisé en ce que** l'unité de transformation (33) comporte des enroulements primaires, un noyau commun de transformation et des enroulements secondaires.

7. Dispositif (100) selon la revendication 5 ou 6, **caractérisé en ce que** l'unité de transformation (33) est réalisée sous forme de circuit balun.

8. Dispositif (100) selon une des revendications de 5 à 7, **caractérisé en ce que** le dispositif (100) comprend, pour la transmission simultanée de données sur des modules de sécurité, une pluralité d'adaptateurs de signaux (30) ayant respectivement une entrée de signal, une unité de transformation et une sortie de signal.

9. Dispositif (100) selon la revendication 8, **caractérisé en ce que** le dispositif (100) comprend une pluralité correspondante d'appareils de lecture de cartes (39).

10. Dispositif (100) selon une des revendications de 5 à 9, **caractérisé en ce que** le dispositif (100) comprend une unité de mise en contact (31) qui comprend des contre-contacts (32A, 32B) pour les bornes d'antennes (12A, 12B) du module de sécurité.

11. Dispositif (100) selon une des revendications de 7 à 10, **caractérisé en ce que** le dispositif (100) comprend une unité de mise en contact multiple (40) qui comprend les adaptateurs de signaux (30) et/ou les unités de mise en contact (31).

12. Dispositif (100) selon une des revendications de 5 à 11, **caractérisé en ce que** le dispositif (100) comporte, pour une adaptation du dispositif (100) à différents modules de sécurité, des éléments de commutation adaptables (C3, C5).

13. Dispositif (100) selon une des revendications de 5 à 12, **caractérisé en ce que** l'unité de transformation (33) est agencée dans un boîtier (36) mis à la terre.

14. Dispositif (100) selon une des revendications de 5 à 12, **caractérisé en ce que** le dispositif est conçu pour transmettre des données à une pluralité de modules de sécurité (11) agencés sur un support (20) commun.

15. Système de production ayant un dispositif (100) selon une des revendications de 5 à 14 ainsi que des moyens de fabrication d'un support de données (10) comprenant le module de sécurité (11), une antenne (15) et un substrat porteur (16).
